Europäisches Patentamt

European Patent Office

Office européen des brevets

Veröffentlichungsnummer: **0 276 353**

A1

# EUROPÄISCHE PATENTANMELDUNG

Anmeldenummer: **87101283.7**

Int. Cl.⁴ **A23L 1/308** , A23G 3/00

Anmeldetag: **30.01.87**

Veröffentlichungstag der Anmeldung:
**03.08.88 Patentblatt  88/31**

Benannte Vertragsstaaten:
**AT BE CH DE FR GB IT LI LU NL SE**

Anmelder: **H. Bahlsens Keksfabrik KG**
**Podbielskistrasse 289**
**D-3000 Hannover(DE)**

Erfinder: **Gründer, Walter**
**Podbielskistrasse 11**
**D-3000 Hannover(DE)**
Erfinder: **Lechte, Hans-Dieter**
**Podbielskistrasse 11**
**D-3000 Hannover(DE)**

**Aus vermischten Bestandteilen hergestellte Nahrungs- und Genussmittel.**

Es wird ein aus vermischten Bestandteilen hergestelltes, direkt oder nach Zubereitung verzehrbares Nahrungs-oder Genußmittel in Form von Zuckerwaren, Schokoladenwaren, Kartoffelprodukten, Fettmassen, Fruchtzubereitungen, Milchprodukten, Getränken oder deren Grundstoffen beschrieben.

Es war angestrebt, bei solchen Podukten eine Verbesserung des Geschmackes, des Aussehens, der Struktur oder Textur des Materials, der sensorischen Leichtigkeit, aber auch der Verarbeitbarkeit und der Homogenität bei Veringerung der Kosten zu erreichen.

Gelöst wurde diese Zielsetzung dadurch, daß das Produkt einen Anteil von bis zu 85 Gewichtsprozenten Torf enthält.

EP 0 276 353 A1

## Aus vermischten Bestandteilen hergestellte Nahrungs-und Genußmittel

Die Erfindung betrifft ein aus vermischten Bestandteilen hergestelltes Nahrungs-oder Genußmittel in Form von Zuckerwaren, Schokoladen und Schokoladenwaren, Kartoffelprodukten. Nährmitteln, Fettmassen. Fruchtzubereitungen, Milchprodukten, Getränken oder deren Grundstoffen.

Bei derartigen verzehrbaren Produkten, die nicht zu den Grundnahrungsmitteln rechnen, spielen besondere Gesichtspunkte wie der Geschmack, das Aussehen, die Struktur oder Textur des Materials, die sensorische Leichtigkeit, aber auch die gute Verarbeitbarkeit der Ausgangsmischung und die Homogenität des Erzeugnisses eine wichtige Rolle. Die Hersteller derartiger verzehrbarer Produkte, insbesondere die industriellen Hersteller, wenden seit vielen Jahrzehnten große Anstrengungen auf. die bekannten Produkte - schrittweise zu verbessern und neue Produkte aus Kombinationen herkömmlicher Bestandteile zu entwickeln.

Der Erfindung liegt die Aufgabe zugrunde, einen Zusatzstoff für Lebensmittel zu finden, der ohne Erhöhung des kalorischen Brennwertes den Geschmack verbessert und intensiviert, die Farbe verstärkt, das Volumen erhöht, das Gefüge lockerer und leichter gestaltet, die Verarbeitbarkeit günstig beeinflußt, die Wärmestabilität verbessert und das Erscheinungsbild in angenehmer Weise beeinflußt.

Soweit - nach gegebener Grundstruktur - die Einbringung ausreichender Mengen eines solchen Grundstoffes möglich ist, sollte seine Zugabe möglichst auch eine Ballaststoffanreicherung bewirken.

Überraschend wurde nun ein solcher neuer Bestandteil für derartige verzehrbare Produkte gefunden. Es hat sich herausgestellt, daß diese Produkte meist in mehrfacher Hinsicht wesentliche Verbesserungen dadurch erfahren können, daß das Produkt einen Anteil von bis zu 85 Geweichtsprozenten an Torf in Form einer aufbereiteten Torffraktion enthält.

Die vorteilhaften Eigenschaften des Torfs sind nicht nur durch das (bekannte) extrem hohe Wasseraufnahme-und Wasserbindungsvermögen begründet, sondern auch - wie überraschend gefunden wurde -durch ein nahezu ebenso hohes Potential zur Fettabsorption. Über den Torf ist somit Wasser in Fettfüllungen einbringbar, ohne daß Versteifungserscheinungen auftreten.

Bei Fettfüllungen und Fruchtzubereitungen und auch bei Zuckerwaren, Schokoladen-Massen und Schokoladenwaren läßt sich glechfalls eine sensorische Leichtigkeit, ggfs. eine Farbintensivierung dunkler, insbesondere brauner Produkte, verbesserte Wärmestabilität, eine Geschmacksintensivierung sowie eine Ballaststoffanreicherung erzielen. Gleichfalls ist eine Volumenerhöhung zu erreichen, und die Konsistenz von Füllungen kann für das Dressieren, Einstreichen, Füllen, Gießen u. dgl. mit dem Ziel einer leichteren Handhabung verbessert werden.

Fettmassen und -zubereitungen bilden dei lockerer Struktur Partikel, die den Zutritt von Speichel zur Füllung fördern und damit einen intensiven Geschmack erschließen, wobei eine gleichmäßige und restlose Nutzung des Geschmackspotentials möglich wird.

In Nährmitteln auf pflanzlicher Basis, in Suppen und Saucen, Fettmassen und in Müsli-Zubereitungen ergeben sich neben der allgemeingültigen Ballaststoffanreicherung, der Farbintensivierung und der Fett-und Wasserabsorption wie sie bereits zuvor erörtert wurden, auffällige Beeinflussungen zur ansprechenden Struktur hin und besonderer Effekte des Erscheinungsbildes.

Auch Getränke bzw. Pulver und Granulate können im Geschmack und in der Farbe intensiviert sowie im Ballaststoffgehalt angereichert werden. Die Wasserabsorption durch die Struktur des Torfs fördert die Benetzbarkeit des Pulvers.

Bei Komprimaten, also gepreßten Erzeugnissen, läbt sich durch den Zusatz von Torf bei hoher Ballaststoffanreicherung eine Geschmacksintensivierung, eine Strukturbeeinflussung und eine sehr gut beherrschbare Volumeneinstellung erzielen. Bei derartigen Produkten sind darüber hinaus weitere Ballaststoffanreicherungen durch extrem hohe Mengen an Torf möglich, auch wenn damit keine Geschmacksverbesserung mehr zu erzielen ist, sondern der Geschmack eher verflacht. Eine Erhöhung des Ballaststoffs und eine Geschmacksverminderung kann aber in besonderen Fällen zur Dämpfung der Eßlust durchaus erwünscht und nützlich sein.

Die vorstehend allgemeiner beschriebene Anwendung von Torf in Nahrungs-und Genußmitteln wird nachfolgend anhand einiger Ausführungsbeispiele näher beschrieben:

Beispiel 1

Fettfüllungen für Dauerbackwaren, Feine Backwaren und Konfekt mit u. a. den Geschmacksrichtungen Nußcreme, Schokocreme, Kakaocreme oder Mokkacreme können durch Torfzusatz gemäß den in Anlage 1 aufgeführten Rezepturbeispielen, in denen für jede Geschmacksrichtung zum einen ein einprozentiger, zum anderen ein zweiprozentiger Torfzusatz vorgesehen wurde, zubereitet werden.

Es zeigt sich, daß mit Erhöhung des Torfanteils z. B. die Kakaobestandteile bei Nußcreme, Schokocreme und Kakaocreme reduziert werden können, wobei sich eine Verringerung um 2 % gegenüber Bezugsmischungen ohne Torf ergibt. Bei Mokkacreme kann der Anteil an Mokkapaste von 6 auf 4 % reduziert werden. Hieraus ergeben sich Materialkosteneinsparungen.

Durch den Einsatz von Torf in einer Fettfüllung wird eine deutliche Geschmacksintensivierung, verbunden mit einer sensorischen Leichtigkeit aufgrund der Fettabsorption, erzielt. Die Farbe wird intensiviert, das Volumen der Füllung erhöht und die Konsistenz beim Dressieren, Einstreichen und Füllen verbessert. Die Wärmeempfindlichkeit solcher Füllungen wird günstig beeinflußt.

Beispiel 2

Für ein Komprimat enthält eine Rezeptur 0 bis 84 % stabilisierte Weizenkleie, 0 bis 20 % stabilisierte Weizenkeime, 0 bis 25% heiße, einprozentige Zuckerlösung, 0 bis 20 % Kekskrumen, 0 bis 8% Fruchtpaste, 0 bis 8 % Milchpulver, 0 bis 15 % Saccharose und 0 bis 15 % Dextrose sowie einen Anteil an Torf bis zu 30 %.

Der Wassergehalt sollte dabei auf 25 % eingestellt werden. Die entsprechende Mischung wird in der Pelletier-Anlage gepreßt, gekühlt und auf einen Wasser-Restgehalt von 3 bis 5 % nachgetrocknet. Das Ergebnis ist ein mit Ballaststoffen angereichertes Komprimat, welches keine Genußeinbuße beinhaltet. Der Geschmack wird eher intensiviert. Eine extreme Ballaststoffanreicherung mit Torfanteilen über 30 % ist möglich, wenn Einbußen an Geschmack akzeptiert werden. Die Struktur der Presslinge wird durch den Torf verbessert. Auch das volumen wird durch diesen Zusatz vergrößert.

Beispiel 3 Komprimate zur Energieaufnahme, wie sie als

Traubenzucker-Tabletten bekannt sind, lassen sich mit einem Torfzusatz in einer Stempelpresse herstellen, wobei die Rezeptur im Rahmen der nachstehenden drei tabellarisch aufgeführten Beispiele liegen kann.

|  | Nr. 1 | Nr. 2 | Nr. 3 |
|---|---|---|---|
| Saccharose | 0,000 % | 7,000 % | 0,000 % |
| Dextrose | 58,200 % | 51,000 % | 52,000 % |
| Wasser | 4,500 % | 2,000 % | 2,000 % |
| Gelatine | 1,000 % | 0,500 % | 0,500 % |
| Emulgator-Gemisch | 1,300 % | 1,500 % | 1,500 % |
| Kakaopulver | 5,000 % | 0,000 % | 8,000 % |
| Torf, getr. | 30,000 % | 30,000 % | 30,000 % |
| Fruchtpaste | 0,000 % | 8,000 % | 0,000 % |
| Honig | 0,000 % | 0,000 % | 6,000 % |

sowie Aromen, Gewürze, Vitaminmix nach Bedarf.

Wiederum ergibt sich eine hohe Ballaststoffanreicherung ohne Genußverzicht und eine Ge-

3

schmacksintensivierung bei den Komprimaten, insbesondere auch hinsichtlich der Frucht-und Kakaoanteile. Weitere Rohstoffkombinationen mit Getreideerzeugnissen, anderen Fruchterzeugnissen, Mineralien, Zuckeralkoholen, Stärkesirupen, Invertzuckern, Fruchtzuckern und Milcherzeugnissen sind möglich.

Beispiel 4

Eine Mischung aus einer Fruchtpaste mit 68 % Trockenmasse und einem Torf mit 80 % Trockenmasse, wobei die Fruchtpaste mit etwa 92,6 % und der Torf mit etwa 7,4 % in die Mischung eingeht, läßt sich durch Herstellen einer Ausrollmasse, Ausrollen, Ausstechen der Komprimatrohlinge und Trocknen der Komprimate verarbeiten, wobei im Ergebnis überaus voluminöse Teilchen (Pellets) entstehen. Statt der Fruchtpaste können auch sonstige Zuckerlösungen eingesetzt werden.

Beispiel 5

Ein aromastarkes, ballaststoffangereichertes Kakao-Instant-Getränk läßt sich - auch wirtschaft-lich vorteilhaft - nach folgender Basis-Rezeptur herstellen:

| | | |
|---|---|---|
| Zucker | 58,4 % | 58,4 % |
| Dextrose | 20,0 % | 20,0 % |
| Kakaopulver | 20,0 % | 15,0 % |
| Torf | - | 5,0 % |
| Lecithin | 1,03 % | 1,03 % |
| Vitamin-Mix | 0,17 % | 0,17 % |
| Aromastoffe | 0,10 % | 0,10 % |
| Würzstoffe | 0,30 % | 0,30 % |

Das Kakao-Instant-Getränk wiest gegenüber dem Pulver ohne Torfzusatz eine dunklere Farbe und einen intessiveren Geschmack auf. Zusätzlich ermöglicht die Struktur des Torfs eine bessere Benetzbarkeit des Instant-Pulvers.

Beispiel 6

Einer Schokolade mit 35 % Kakaomasse, 15,5 % Kakaobutter, 47 % Zucker und 0,5 % Emulgator wird vor der Dünnschichtröstung der Kakaomasse 2 % Torf zugesetzt. Das Produkt wird sensorisch besser beurteilt als ohne Torfzusatz, da die Farbe dunkler und der Geschmack kräftiger ist. Gleichzeitig bewirkt der Torf eine verbesserung der Textur. Eine leichte Ballaststoffanreicherung gibt dem Produkt diätetischen Nutzen. Die Wärmeempfindlichkeit der Schokolade wird reduziert.

Beispiel 7

Zur Herstellung von Kartoffelklößen werden, von einer Grundrezeptur mit 250 g gekochten und 250 g rohen Kartoffeln sowie Salz und Gewürzen ausgehend, 50 g gekochte Kartoffeln durch 12,5 g Torf und 150 g Wasser ersetzt.

Das fertige produkt weist aufgrund der guten Wasserbindung durch den Torf ein größeres Volumen, eine lockere Struktur und einen erhöhten Ballaststoffgehalt auf. Durch den höheren Wasser-und Ballaststoffgehalt ergibt sich bei Torfzusatz im Vergleich zur Grundrezeptur eine Kalorienreduktion von ca. 30 %.

Beispiel 8

Eine geformte Pralinen-Einlage aus 54 % Marzipan, 21.5 % Staubzucker. 9.5 % Glucosesirup. 4 % Rum 70 Vol %. 6 % Kakaopulver und 5% Torf wird in üblicher weise verarbeitet, wobei im Vergleich zur Grundrezeptur 5 Prozentpunkte Kakaopulver durch Torf ersetzt worden sind.

Neben der Materialkosteneinsparung durch die Reduzierung des Kakaoanteiles führt der Einsatz von Torf zu einer Farb-und Geschmacksintensivierung sowie zur Ballaststoffanreicherung der Masse.

Beispiel 9

Eine Mokka-Weinbrand-Füllung für einen Pralinen-Hohlkörper wird mit 46 % Marzipanmasse. 41 % Invertzucker, 7 % Weinbrand 65 Vol %, 3 % Mokkapaste und 3 % Torf hergestellt. Im Vergleich zur Grundrezeptur sind 50 % des Mokkapastenanteils durch Torf ersetzt worden.

Die Füllung weist neben der intensiveren Farbe trotz der Reduktion des Mokkapastenanteils einen intensiveren Geschmack auf. Außerdem führt der Zusatz von Torf zur Anreicherung der Füllung mit Ballaststoffen.

Beispiel 10

Zur Herstellung eines Kaubonbons mit Kaffeegeschmack werden 35,5 % Zucker. 35,5 % Glucosesirup. 0,4 % Gelatine. 1,4 % Wasser, 21,3 % Fondant, 3,6 % Hartfett, 1 % Kakaopulver. 0,17 % Mokkapaste. 0,1 % Salz und 1,03 % Torf verwendet. Im Vergleich zur Grundrezeptur wurden 1 % Kakaopulver und 0,03 % Mokkapaste durch Torf ersetzt.

Auch hier ergab sich genenüber dem Ursprungsrezept eine Geschmacks-und Farbintensivierung.

Beispiel 11

Zur Herstellung des Milch-Kakaoprodukts Milch-Crumb werden 266g Vollmilch evaporiert und mit 53,5 g Zucker kondensiert. Dieses Gemisch wird mit 80 g Kakaomasse, 27,5 g Kakaobutter, 22,5 g Torf und 10 g Wasser verknetet, getrocknet und zerkleinert. Die gleiche Rezeptur kann für andere schokoladenartige Zubereitungen gesprüht werden (Instant-Produkte).

Der Einsatz von Torf führt neben der Materialkosteneinsparung zur Ballaststoffanreicherung, Geschmacks-und Farbintensivierung.

Beispiel 12

Eine Haselnußzubereitung aus 40 % Haselnüssen, 6,3 % Pflanzenfett, 3,7 % Torf und 50 % Zucker wird in üblicher Weise fein gewalzt, wobei im Vergleich zur Grundrezeptur 10 Prozentpunkte Haselnüsse durch 6,3 % Pflanzenfett und 3,7 % Torf ersetzt werden. Der Schmelzbereich des verwendeten Fettes muß mit dem des Haselnußfettes identisch sein.

Durch den Einsatz von Torf in der Nußzubereitung wird eine deutliche Geschmackintensivierung, verbunden mit einer sensorischen Leichtigkeit aufgrund der Fettabsorption, erzielt. Ebenso wird die Farbe intensiviert und das Produkt mit Ballaststoffen angereichert.

## Rezepturbeispiele

### Anlage zu Beispiel 1 (Fettfüllungen)

| | Nußcreme 1 | Nußcreme 2 | Schokocreme 1 | Schokocreme 2 | Mokkacreme 1 | Mokkacreme 2 |
|---|---|---|---|---|---|---|
| Pflanzenfett | 29,300 % | 29,300 % | 36,000 % | 36,000 % | 37,000 % | 37,000 % |
| Zucker | 32,000 % | 32,000 % | 50,500 % | 50,500 % | 27,800 % | 27,800 % |
| Nougatmasse | 18,500 % | 18,500 % | - | - | - | - |
| Zartbitter-Schokolade | 2,500 % | 2,500 % | - | - | 4,300 % | 4,300 % |
| Milchpulver | 9,200 % | 9,200 % | 1,000 % | 1,000 % | - | - |
| Magermilchpulver | 3,500 % | 3,500 % | 2,000 % | 2,000 % | 2,800 % | 2,800 % |
| Molkenpulver | 3,000 % | 3,000 % | 1,900 % | 1,900 % | 2,800 % | 2,800 % |
| Kakaopulver | 1,000 % | - | 7,600 % | 6,600 % | 8,300 % | 8,300 % |
| Torf | 1,000 % | 2,000 % | 1,000 % | 2,000 % | 1,000 % | 2,000 % |
| Dextrose | - | - | - | - | 11,000 % | 11,000 % |
| Mokkapaste | - | - | - | - | 5,000 % | 4,000 % |

0 276 353

**Ansprüche**

1. Aus vermischten Bestandteilen hergestelltes, direkt oder nach Zubereitung verzehrbares Nahrungs- oder Genußmittel in Form von Zuckerwaren, Schokoladen und Schokoladenwaren, Kartoffelprodukten, Nährmitteln, Fettmassen, Fruchtzubereitungen, Milchprodukten, Getränken oder deren Grundstoffen, dadurch gekennzeichnet, daß es einen Anteil von bis zu 85 Gewichtsprozenten Torf enthält.

2. Produkt nach Anspruch 1, dadurch gekennzeichnet, daß der Torf vor dem Vermischen durch Trocknen, Mahlen und Sieben aufbereitet wird.

3. Produkt nach Anspruch 1 und 2, dadurch gekennzeichnet, daß es als Kartoffelprodukt bis zu 20 Gewichtsprozenten an Torf enthält.

4. Produkt nach Anspruch 3, dadurch gekennzeichnet, daß es zusätzlich einen Getreideanteil enthält.

5. Produkt nach Anspruch 3 und 4, dadurch gekennzeichnet, daß es einen Kakaozusatz enthält.

6. Produkt nach Anspruch 1 und 2, dadurch gekennzeichnet, daß es als Komprimat einen Anteil an Torf von bis zur 30 Gewichtsprozenten enthält.

7. Produkt nach Anspruch 1 und 2, dadurch gekennzeichnet, daß es als Fettfüllung für Feine Backwaren und Konfekt bis zu 20 Gewichtsprozente an Torf enthält.

8. Produkt nach Anspruch 7, dadurch gekennzeichnet, daß im Austausch zum Trofanteil die Anteile der geschmacksgebenden Komponenten bis zu 10 % reduziert sind.

9. Produkt nach Anspruch 1 und 2, dadurch gekennzeichnet, daß es als Zuckerware bis zu 35 Gewichtsprozente an Torf enthält.

10. Produkt nach Anspruch 1 und 2, dadurch gekennzeichnet, daß es als Schokoladenmasse oder Schokoladenware bis zu 25 Gewichtsprozente an Torf enthält.

11. Produkt nach Anspruch 1 und 2, dadurch gekenzeichnet, daß es als Nährmittel bis zu 25 Gewichtsprozente an Torf enthält.

12. Produkt nach Anspruch 1 und 2, dadurch gekennzeichnet, daß es als Getränk oder Getränkegrundstoff bis zu 15 Gewichtsprozente an Torf enthält.

13. Produkt nach Anspruch 1 und 2, dadurch gekennzeichnet, daß es als Fettmasse bis zu 25 Gewichtsprozente an Torf enthält.

14. Produkt nach Anspruch 1 und 2, dadurch gekennzeichnet, daß es als Fruchtzubereitung bis zu 25 Gewichtsprozente an Torf enthält.

15. Produkt nach Anspruch 1 und 2, dadurch gekennzeichnet, daß es als Milchprodukt bis zu 15 Gewichtsprozente an Torf enthält.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | FR-A- 427 899 (J.J.W.G. GALLOO) * Seite 1, Zeilen 1-3,26-46; Seite 2, Zeilen 63-73 * | 1,2,4, 9 | A 23 L 1/308 A 23 G 3/00 |
| Y | | 11 | |
| X | PATENT ABSTRACTS OF JAPAN, Band 7, Nr. 91 (C-162)[1236], 15. April 1983; & JP-A-58 20 143 (SUNSTAR HAMIGAKI K.K.) 05-02-1983 * Zusammenfassung * | 1 | |
| Y | Idem | 11 | |
| A | FR-A- 875 290 (NORIT VEREENIGING VERKOOP CENTRALE) | | RECHERCHIERTE SACHGEBIETE (Int. Cl.4) A 23 L A 23 G |

Der vorliegende Recherchenbericht wurde für alle Patentansprüche erstellt.

| Recherchenort | Abschlußdatum der Recherche | Prüfer |
|---|---|---|
| DEN HAAG | 23-09-1987 | GUYON R.H. |